(19)

**Europäisches Patentamt**
**European Patent Office**
**Office européen des brevets**

(11) **EP 2 756 332 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **12761585.4**

(22) Anmeldetag: **12.09.2012**

(51) Internationale Patentklassifikation (IPC):
***G01S 19/20*** (2010.01)

(52) Gemeinsame Patentklassifikation (CPC):
**G01S 19/20**

(86) Internationale Anmeldenummer:
**PCT/EP2012/067866**

(87) Internationale Veröffentlichungsnummer:
**WO 2013/037844 (21.03.2013 Gazette 2013/12)**

(54) **VERFAHREN ZUM AUSWÄHLEN EINES SATELLITEN**

METHOD FOR SELECTING A SATELLITE

PROCÉDÉ DE SÉLECTION D'UN SATELLITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2011 DE 102011082534**
**12.09.2011 DE 102011082539**
**21.11.2011 DE 102011086710**
**02.05.2012 DE 102012207297**

(43) Veröffentlichungstag der Anmeldung:
**23.07.2014 Patentblatt 2014/30**

(73) Patentinhaber: **Continental Automotive Technologies GmbH**
**30165 Hannover (DE)**

(72) Erfinder: **STEINHARDT, Nico**
**60327 Frankfurt (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**WO-A1-98/39722          WO-A1-2010/073113**
**WO-A2-2010/058266      JP-A- 2001 264 409**
**US-A- 5 631 838          US-A1- 2009 128 407**
**US-A1- 2010 328 150**

- **BROWN R GROVER ED - PARKINSON B W ET AL: "Receiver Autonomous Integrity Monitoring", 1. Januar 1996 (1996-01-01), GLOBAL POSITIONING SYSTEM: THEORY AND APPLICATIONS; [PROGRESS IN ASTRONAUTICS AND AERONAUTICS VOL. 163], WASHINTON, DC : AIAA, US, PAGE(S) 143 - 165, XP008090948, ISBN: 978-1-56347-107-0 * Seite 146, Abschnitt "Range Comparison Method" ***

**Beschreibung**

Die Erfindung betrifft ein Verfahren zum Auswählen eines Satelliten, der ausgebildet ist ein GNSS-Signal an ein Fahrzeug zu senden, eine Steuervorrichtung zur Durchführung des Verfahrens und ein Fahrzeug mit der Steuervorrichtung.

Aus der WO 2011 / 098 333 A1 ist bekannt, in einem Fahrzeug verschiedene Sensorgrößen heranzuziehen, um bereits vorhandene Sensorgrößen zu verbessern oder neue Sensorgrößen zu generieren und somit die erfassbare Information zu steigern.

WO 2010/073113 A1 betrifft ein Verfahren, bei dem ausgehend von einem empfangenen GNSS-Signal und ausgehend von Geschwindigkeitssensordaten Referenzdaten ermittelt und mit Messdaten verglichen werden, um die Nutzbarkeit des GNSS-Signals zu beurteilen und zu kennzeichnen. Bei dem Vergleich wird ein Schwellwert überprüft, der von den Referenzdaten, den Messdaten und dem Empfängeruhrenfehler abhängt.

Die US 2010328150 A1 betrifft ein Navigationssystem zum Detektieren von Fehlern auf Dopplerfrequenzen einer Vielzahl von Satellitensignalen, die durch das Navigationssystem gemessen werden, wobei das Navigationssystem einen Offset-Rechner zum Berechnen von Offsets der Dopplerfrequenzen der Satellitensignale während einer vorbestimmten Zeitperiode und zum Berechnen eines Durchschnittswerts der Offsets umfasst. Das Navigationssystem umfasst ferner eine Fehlererkennungseinheit, die mit dem Offset-Rechner gekoppelt ist. Die Fehlererkennungseinheit vergleicht die Offsets der Dopplerfrequenzen der Satellitensignale mit dem Durchschnittswert der Offsets und bestimmt gemäß entsprechenden Vergleichsergebnissen, ob die Satellitensignale nicht verfügbar sind.

Gemäß der WO 98/39722 A1 wird in Echtzeit eine Bewertung der Integrität der Ortungslösung und der Navigationssensoren bereitgestellt, die verwendet werden, um ein Notrufsystem zu unterstützen, das Ortungs- und Mobiltelefontechnologie integriert. Diese Integritätsinformation wird über eine dem Fahrer angezeigte Warnleuchte verwendet, um anzuzeigen, wenn das System Notrufe nicht mit der erforderlichen Genauigkeit unterstützt. Dabei werden mindestens zwei Arten von Warnungen erzeugt und dem Benutzer bereitgestellt, wobei die erste ein Hinweis darauf ist, dass die Positionsgenauigkeit keinen Notruf mehr unterstützt, die zweite ein Hinweis ist, dass ein Sensor oder ein Subsystem des Notruf-Ortungssystems eine Fehlfunktion aufweist und so schnell wie möglich gewartet werden sollte, wobei eine solche Fehlfunktion zu einem eventuellen Ausfall des Systems führen kann.

Es ist Aufgabe die Nutzung mehrerer Sensorgrößen zur Informationssteigerung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren Auswählen eines Satelliten, der ausgebildet ist ein Globales Navigationssatellitensystem-Signal, nachstehend GNSS-Signal genannt, an ein Fahrzeug zu senden die Schritte:

- Messen von Messlagedaten des Fahrzeuges gegenüber dem Satelliten basierend auf dem GNSS-Signal,
- Bestimmen von zu den basierend auf dem GNSS-Signal bestimmten Messlagedaten redundanten Referenzlagedaten des Fahrzeuges; und
- Auswählen des Satelliten, wenn eine Gegenüberstellung der Messlagedaten und der Referenzlagedaten einer vorbestimmten Bedingung genügt, wobei die vorbestimmte Bedingung ein maximal zulässiger Fehler zwischen den Messlagedaten und den Referenzlagedaten ist und der maximal zulässige Fehler von einer Standartabweichung abhängig ist, die basierend auf einer Summe aus einer Referenzvarianz für die Referenzlagedaten und einer Messvarianz für die Messlagedaten berechnet wird, wobei der maximal zulässige Fehler einem Vielfachen der Standardabweichung derart entspricht, dass eine Wahrscheinlichkeit, dass die Messlagedaten in ein von der Standardabweichung abhängiges Streuintervall einen vorbestimmten Schwellwert unterschreiten.

Dem angegebenen Verfahren liegt die Überlegung zugrunde, dass aus dem GNSS-Signal Positionsinformationen des Fahrzeuges abgeleitet werden könnten. Diese Überlegung zugrunde gelegt, wird im Rahmen des angegebenen Verfahrens jedoch erkannt, dass das GNSS-Signal vor seinem Empfang am Fahrzeug verschiedene Störquellen durchlaufen könnte, die das GNSS-Signal verrauschen könnten, so dass es nicht mehr die wahre Position des Fahrzeuges anzeigt. Derartige Störquellen könnten ein Mehrwegeempfang, Abschattungen oder Reflektionen darstellen.

Basierend auf diesen Überlegungen ist es Idee des angegebenen Verfahrens für das GNSS-Signal einen Erwartungswert festzulegen, aus dem mit einer ausreichenden Genauigkeit eine Referenz für die Qualität des GNSS-Signals abgeleitet werden kann. Ist die Abweichung zwischen dem GNSS-Signal und dem als Referenz herangezogenen Erwartungswert ausreichend klein, dann wird der Satellit als Quelle für das GNSS-Signal ausgewählt.

In einer Weiterbildung wird zur Gegenüberstellung der Messlagedaten und der Referenzlagedaten eine Differenz zwischen den Messlagedaten und den Referenzlagedaten gebildet. Dieser Weiterbildung liegt die Überlegung zugrunde, dass die Gegenüberstellung zwar basierend auf jedem beliebigen Filter durchgeführt werden könnte, aus der Differenz der beiden Lagedaten geht jedoch unmittelbar ihre Abweichung zueinander vor, was das GNSS-Signal statistisch beschreibt und somit unmittelbar eine Bewertung seiner Qualität zulässt.

Als vorbestimmte Bedingung ist ein maximal zulässiger Fehler zwischen den Messlagedaten und den Referenzlagedaten zuzulassen, der wiederum eine Qualitätsschranke bei der Auswahl des Satelliten darstellt.

Der maximal zulässige Fehler ist von einer Standartabweichung abhängig, die basierend auf einer Summe aus einer Referenzvarianz für die Referenzlagedaten und einer Messvarianz für die Messlagedaten berechnet wird. Dieser Weiterbildung liegt die Überlegung zugrunde, dass hier zwei statistische Werte gleichzeitig bei der Auswahl des Satelliten einfließen. Der Referenzwert könnte iterativ bestimmt werden, wobei seine Qualität mit steigenden Iterationsschritten immer höher wird. Das heißt aber, dass der Referenzwert zunächst selbst stark verrauscht und fehlerbehaftet sein kann, weshalb es zu diesem Zeitpunkt nicht zweckmäßig wäre, ein GNSS-Signal mit einer sehr hohen Qualität auszuwählen. Indem der maximal zulässige Fehler und damit die zulässige Abweichung abhängig von den Varianzen und damit dem Rauschen der beiden Lagedaten gewählt wird, werden der maximal zulässige Fehler zwischen den Lagedaten und das Rauschen der Lagedaten selbst bei der Auswahl korreliert. Es ist damit gesichert, dass das Rauschen des vom auszuwählenden Satelliten an die Abweichung zwischen dem Erwartungswert und dem durch das GNSS-Signal repräsentierten Messwert angepasst ist.

Der maximal zulässige Fehler entspricht einem Vielfachen der Standardabweichung derart, dass eine Wahrscheinlichkeit, dass die Messlagedaten in ein von der Standardabweichung abhängiges Streuintervall einen vorbestimmten Schwellwert unterschreiten. Auf diese Weise ist sichergestellt, dass durch die unvermeidliche Streuung der Abweichungen zwischen den Referenzlagedaten, also dem Erwartungswert und den Messlagedaten, also dem Messwert, nicht zufällig ein eigentlich geeigneter Satellit nicht ausgewählt wird.

Dem angegebenen Verfahren liegt die Überlegung zugrunde, dass die Auswahl des Satelliten schon anhand harter Entscheidungsgrundlagen durchgeführt werden könnte, weil das Fahrzeug, dass das GNSS-Signal nutzt, bestimmten physikalischen Randbedingungen unterworfen ist. Das Fahrzeug darf beispielsweise nicht beliebig beschleunigen und kann auch nicht beliebig schnell fahren. Diese physikalischen Randbedingungen können als Grundlage für die Auswahl des Satelliten herangezogen werden, ohne dass es weiterer Vergleichsmessungen bedarf, um die Qualität des GNSS-Signals zu überprüfen.

Daher kann die vorbestimmte Bedingung vorzugsweise eine physikalische Randbedingung sein, der das Fahrzeug unterworfen ist.

Besonders bevorzugt kann die physikalische Randbedingung eine Grenzbeschleunigung und/oder eine Grenzgeschwindigkeit für das Fahrzeug sein.

In einer besonderen Weiterbildung des angegebenen Verfahrens können die Messlagedaten beispielsweise eine Geschwindigkeit und/oder eine Beschleunigung umfassen, die aus dem GNSS-Signal abgeleitet wird. Auf diese Weise kann direkt überprüft werden, ob die zuvor genannten physikalischen Randbedingungen erfüllt sind, oder nicht.

Gemäß einem weiteren Aspekt der angegebenen Erfindung umfasst ein Verfahren zum Auswählen eines Satelliten, der ausgebildet ist ein Globales Navigationssatellitensystem-Signal, nachstehend GNSS-Signal genannt, an ein Fahrzeug zu senden, die Schritte:

- Erfassen einer Lage wenigstens dreier Satelliten untereinander, die den auszuwählenden Satelliten umfassen;
- Messen von Messlagedaten des Fahrzeuges gegenüber dem Satelliten basierend auf dem GNSS-Signal des auszuwählenden Satelliten,
- Auswählen des auszuwählenden Satelliten basierend auf einer Gegenüberstellung der Lage der drei Satelliten zueinander und der Messlagedaten.

Dem angegebenen Verfahren liegt die Überlegung zugrunde, dass die drei Satelliten mit dem auszuwählenden Satelliten eine an sich bekannte Lage zueinander aufweisen. Ausgehend von dieser bekannten Lage muss sich das Fahrzeug gegenüber diesen drei Satelliten auch in einer zu erwartenden Weise bewegen. Diese zu erwartenden Bewegung kann als Entscheidungsgrundlage zur Auswahl des GNSS-Signals und damit des auszuwählenden Satelliten herangezogen werden.

Im Rahmen des angegebenen Verfahrens wird dabei erkannt, dass die Lage der drei Satelliten zueinander relative Positionsangaben umfasst. Damit ein GNSS-Signal fälschlicherweise als fehlerfrei interpretiert wird, müssten die GNSS-Signale aller drei GNSS-Satelliten in einer exakt gleichen Weise durch Abschattungen, Mehrfachreflexionen, und so weiter verfälscht werden, was jedoch aufgrund der völlig verschiedenen Signallaufpfade so gut wie ausgeschlossen werden kann. Daher liefert das angegebene Verfahren eine sehr zuverlässige Entscheidungsgrundlage für die Auswahl eines Satelliten.

In einer Weitebildung des angegebenen Verfahrens umfasst die Gegenüberstellung der Lage der drei Satelliten zueinander und der Messlagedaten Gegenüberstellung der Abstände des Fahrzeuges zu den drei Satelliten. Dieser Weiterbildung liegt die Überlegung zugrunde, dass die GNSS-Signale der drei Satelliten basierend auf der Lage der Satelliten zueinander auf eventuelle Widersprüche hin untersucht werden könnte. Befinden sich beispielsweise alle drei Satelliten in Fahrtrichtung des Fahrzeuges betrachtet vor dem Fahrzeug, dann müssen alle drei Abstände kleiner werden. Zudem kann aus trigonometrischen Betrachtungen heraus bestimmt werden, wie schnell einzelne Abstände des Fahrzeuges zum entsprechenden Satelliten kleiner werden dürfen. Die Abstände der Satelliten zueinander können aus von den Satelliten übermittelten Informationen abgeleitet werden.

Gemäß einem weiteren Aspekt der angegebenen Erfindung umfasst ein Verfahren zum Auswählen eines Satelliten, der ausgebildet ist ein Globales Navigationssatellitensystem-Signal, nachstehend GNSS-Signal genannt, an ein Fahrzeug zu senden, die Schritte:

- Erfassen eines Abstandes des Fahrzeuges zum Satelliten und einer Relativgeschwindigkeit des Fahrzeuges zum Satelliten in Sichtrichtung zum Satelliten aus dem GNSS-Signal;
- Auswählen des Satelliten basierend auf einer Gegenüberstellung des erfassten Abstandes und der erfassten Relativgeschwindigkeit.

Dem angegebenen Verfahren liegt die Überlegung zugrunde, dass der Abstand des Fahrzeuges zum Satelliten und die Relativgeschwindigkeit des Fahrzeuges gegenüber dem Satelliten voneinander abhängig, also korreliert sind. Ferner liegt dem angegebenen Verfahren die Überlegung zugrunde, dass die Relativgeschwindigkeit aus dem GNSS-Signal beispielsweise basierend auf Dopplereffekten erfasst werden könnte, während der Abstand des Fahrzeuges zum Satelliten beispielsweise basierend auf einer Laufzeit des GNSS-Signals und damit messtechnisch unabhängig zur Erfassung der Relativgeschwindigkeit erfasst werden könnte. Idee des angegebenen Verfahrens ist es nun, dass dennoch beide Messungen zueinander passen müssen, das die zu erfassenden Messgrößen, also die Relativgeschwindigkeit und der Abstand voneinander abhängig sind.

Die Gegenüberstellung kann beliebig basierend auf einer Differenzbildung oder einer anderen Filterung erfolgen. Aus einer Differenzbildung geht die Entscheidungsgrundlage zur Auswahl des Satelliten mit einer minimalen Rechenzeit sofort hervor.

Für alle zuvor angegebenen Verfahren können noch folgende Weiterbildungen durchgeführt werden: Die Messlagedaten des Fahrzeuges und die Referenzlagedaten des Fahrzeuges können je einen Abstand vom Satelliten und/oder eine Relativgeschwindigkeit in Sichtrichtung des Satelliten umfassen. Das heißt, dass das gemäß dem letzten Aspekt der Erfindung angegebene Verfahren den Satelliten basierend auf einer Analyse der Messlagedaten in sich selbst auswählt, wobei des den Vorteil ausnutzt, dass das GNSS-Signal die Messlagedaten mit messtechnisch auf zwei unterschiedliche Weisen erfassbaren Prinzipien überträgt.

In einer bevorzugten Weiterbildung eines der angegebenen Verfahren ist der Abstand vom Satelliten und/oder die Relativgeschwindigkeit in Sichtrichtung des Satelliten entsprechend aus einer Codemessung und einer Phasenmessung des GNSS-Signals ermittelbar.

Als GNSS-Signal kann beispielsweise ein Global Positioning System-Signal, kurz GPS-Signal, ein Глоба́льная Навигацио́нная Спу́тниковая Систе́ма Signal, kurz GLONASS-Signal oder ein Galileo-Signal verwendet werden. Damit stünde eine alternative oder zusätzliche Vergleichsgröße für die Fahrzeuglängsgeschwindigkeit zur Verfügung basierend auf der der Informationsgehalt des zu erfassenden Reifenhalbmessers verbessert werden könnte. Das GNSS-Signal erlaubt es beispielsweise Netzwerkteilnehmer in einem Bordnetz des Fahrzeuges, wie beispielsweise Sensoren, aufgrund seiner hochgenauen Zeitstempel entsprechend hochgenau zeitlich zu synchronisieren. Eine derartige Synchronisation steht derzeit im Fokus der aktuellen Entwicklung zur Car2X-Kommunikation, also dem Datenaustausch von einem Fahrzeug zu anderen Fahrzeugen oder Systemen in der Umgebung, wie zum Beispiel Ampeln oder andere Infrastrukturkomponenten. Durch den Austausch von Informationen über Unfälle und andere Gefahrenstellen, über die Beschaffenheit der Strecke, Verkehrszeichen und vieles mehr, kann ein Gewinn an Sicherheit und Komfort erzielt werden. Dabei muss in vielen Fällen die Information in Echtzeit bereitgestellt werden. Um diese Echtzeit zu gewährleisten kann die Information beispielsweise mit einem hochgenauen Zeitstempel versehen werden, der vom jeweiligen Netzwerkteilnehmer mit der Information verknüpft wird. Dieser Zeitstempel muss jedoch entsprechend hochgenau sein, was durch die Auswahl eines unverfälschten GNSS-Signals gewährleistet wird.

In einer anderen Weiterbildung eines der angegebenen Verfahren sind die Referenzlagedaten von Fahrdynamikdaten und/oder Odometriedaten des Fahrzeuges abhängig. Dieser Weiterbildung liegt die Überlegung zugrunde, dass die Referenzlagedaten basierend auf dem GNSS-Signal beispielsweise in einem Fusionsfilter präzisiert werden können. Dies könnte beispielsweise dadurch geschehen, dass die Referenzlagedaten dem GNSS-Signal selbst oder aus dem GNSS-Signal abgeleiteten Lagedaten, wie den Messlagedaten in einem Beobachter gegenübergestellt werden. Unter einen solchen Beobachter kann jedes Filter fallen, das eine analoge oder digitale Zustandsbeobachtung des Fahrzeuges zulässt. So kann beispielsweise ein Luenberger Beobachter herangezogen werden. Soll das Rauschen mit be-rücksichtigt werden, käme ein Kalman-Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt. Der Beobachter ist vorzugsweise ein Kalman-Filter, der hinsichtlich seiner notwendigen Rechenressourcen ein optimales Ergebnis liefert. Durch die Beobachtung werden die Referenzlagedaten mit der Zeit immer präziser und erlauben es damit auch immer präzisere GNSS-Signale auszuwählen.

Gemäß einem weiteren Aspekt der Erfindung ist eine Steuervorrichtung umfassend einen GNSS-Empfänger, einen Fusionssensor und mindestens einen weiteren Sensor eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist eines angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

    Fig. 1 eine Prinzipdarstellung eines Fahrzeuges mit einem Fusionssensor,

    Fig. 2 eine Prinzipdarstellung den Fusionssensor aus Fig. 1,

    Fig. 5, eine erste schematische Darstellung eines ein GNSS-Signal empfangenden Fahrzeuges, und

    Fig. 6,eine zweite schematische Darstellung eines ein GNSS-Signal empfangenden Fahrzeuges zeigen.

In den Figuren werden gleiche technische Elemente mit gleichen Bezugszeichen versehen und nur einmal beschrieben.

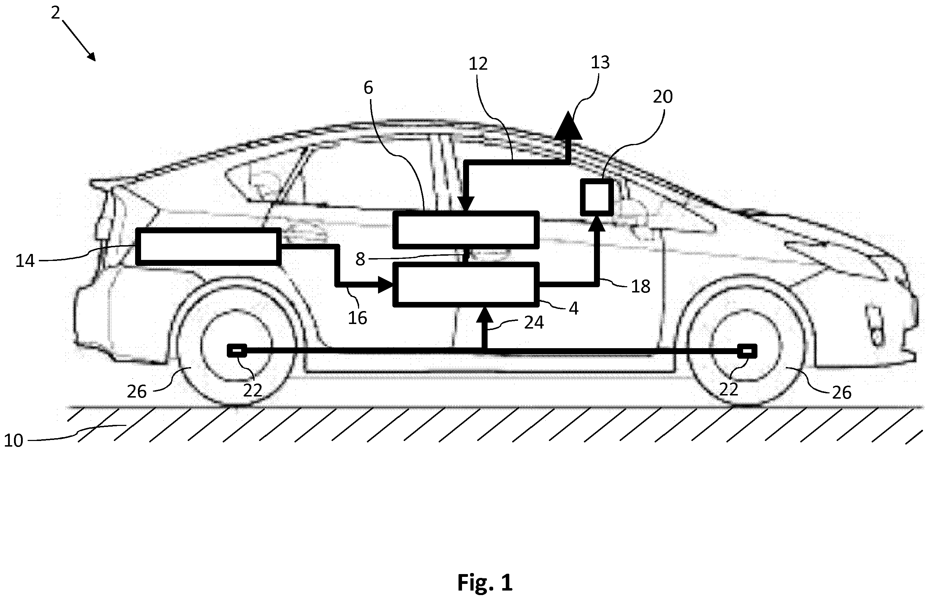

Es wird auf Fig. 1 Bezug genommen, die eine Prinzipdarstellung eines Fahrzeuges 2 mit einem Fusionssensor 4 zeigt.

Der Fusionssensor 4 empfängt in der vorliegenden Ausführungsform über einen an sich bekannten GNSS-Empfänger 6 Lagedaten 8 des Fahrzeuges 2, die eine absolute Position des Fahrzeuges 2 auf einer Fahrbahn 10 umfassen. Neben der absoluten Position umfassend die Lagedaten 8 aus dem GNSS-Empfänger 6 auch eine Geschwindigkeit des Fahrzeuges 2. Die Lagedaten 8 aus dem GNSS-Empfänger 6 werden in der vorliegenden Ausführung in einer dem Fachmann bekannten Weise aus einem GNSS-Signal 12 in dem GNSS-Empfänger 6 abgeleitet, das über eine GNSS-Antenne 13 empfangen wird und daher nachstehend GNSS-Lagedaten 8 genannt. Für Details dazu wird auf die einschlägige Fachliteratur dazu verwiesen.

Der Fusionssensor 4 ist in einer noch zu beschreibenden Weise dazu ausgebildet, den Informationsgehalt der aus dem GNSS-Signal 12 abgeleiteten GNSS-Lagedaten 8 zu steigern. Dies ist einerseits notwendig, da das GNSS-Signal 12 einen sehr hohen Signal/Rauschbandabstand aufweisen und so sehr ungenau sein kann. Andererseits ist das GNSS-Signal 12 nicht ständig verfügbar.

In der vorliegenden Ausführung weist das Fahrzeug 2 dazu einen Inertialsensor 14 auf, der Fahrdynamikdaten 16 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2. Diese Fahrdynamikdaten 16 werden in der vorliegenden Ausführung herangezogen, um den Informationsgehalt der GNSS-Lagedaten 8 zu steigern und beispielsweise die Position und die Geschwindigkeit des Fahrzeuges 2 auf der Fahrbahn 10 zu präzisieren. Die präzisierten Lagedaten 18 können dann von einem Navigationsgerät 20 selbst dann verwendet werden, wenn das GNSS-Signal 12 beispielsweise unter einem Tunnel überhaupt nicht verfügbar ist.

Zur weiteren Steigerung des Informationsgehaltes der GNSS-Lagedaten 8 können in der vorliegenden Ausführung optional noch Raddrehzahlsensoren 22 verwendet werden, die die Raddrehzahlen 24 der einzelnen Räder 26 des Fahrzeuges 2 erfassen.

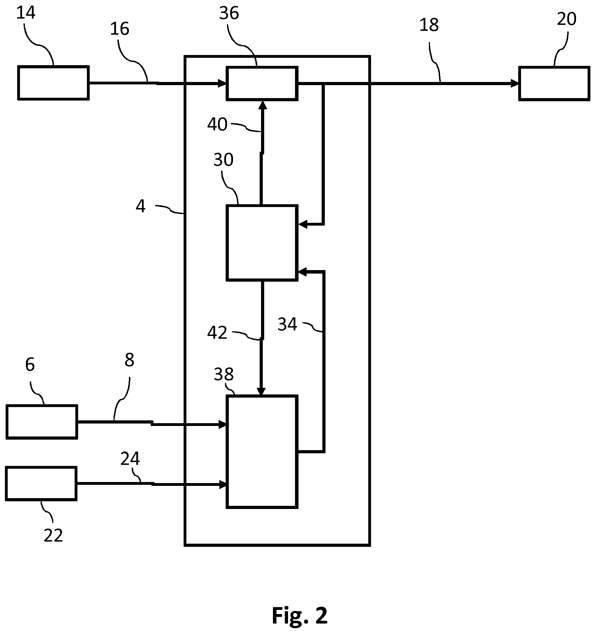

Es wird auf Fig. 2 Bezug genommen, die eine Prinzipdarstellung Fusionssensors 4 aus Fig. 1 zeigt.

In den Fusionssensor 4 gehen die in Fig. 1 bereits erwähnten Messdaten ein. Der Fusionssensor 4 soll die präzisierten Lagedaten 18 ausgeben. Grundgedanke dazu ist es, die Information aus den GNSS-Lagedaten 8 den Fahrdynamikdaten 16 aus dem Inertialsensor 14 in ein Filter 30 gegenüberzustellen und so einen Signal/Rauschbandabstand in den Lagedaten 8 des GNSS-Empfängers 6 oder den Fahrdynamikdaten 16 aus dem Inertialsensor 14 zu erhöhen. Dazu kann das Filter zwar beliebig ausgebildet, ein Kalman-Filter löst diese Aufgabe am wirkungsvollsten mit einem vergleichsweise geringen Rechenressourcenanspruch. Daher soll das Filter 30 nachstehend vorzugsweise ein Kalman-Filter 30 sein.

In das Kalman-Filter 30 gehen die präzisierten Lagedaten 18 des Fahrzeuges 2 und Vergleichslagedaten 34 des Fahrzeuges 2 ein. Die präzisierten Lagedaten 18 werden in der vorliegenden Ausführung in einem beispielsweise aus der DE 10 2006 029 148 A1 bekannten Strapdown-Algorithmus 36 aus den Fahrdynamikdaten 16 generiert. Sie enthalten präzisierten Positionsinformationen über das Fahrzeug, aber auch andere Lagedaten über das Fahrzeug 2, wie beispielsweise seine Geschwindigkeit, seine Beschleunigung und sein Heading. Demgegenüber werden die Vergleichslagedaten 34 aus einem Modell 38 des Fahrzeuges 2 gewonnen, das zunächst einmal aus dem GNSS-Empfänger 6 mit den GNSS-Lagedaten 8 gespeist wird. Aus diesen GNSS-Lagedaten 8 werden dann in dem Modell 38 die Vergleichslagedaten 34 bestimmt, die die gleichen Informationen enthalten, wie die präzisierten Lagedaten 18. Die präzisierten Lagedaten 18 und die Vergleichslagedaten 34 unterscheiden sich lediglich in ihren Werten.

Das Kalman-Filter 30 berechnet basierend auf den präzisierten Lagedaten 18 und den Vergleichslagedaten 34 einen Fehlerhaushalt 40 für die präzisierten Lagedaten 18 und einen Fehlerhaushalt 42 für die Vergleichslagedaten 34. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Bei dem GNSS-Signal 12 und damit bei den GNSS-Lagedaten 8 kann sich ein entsprechender Fehlerhaushalt aus Fehlern der Satellitenbahn, der Satellitenuhr, der restlichen Refraktionseffekte und aus Fehlern im GNSS-Empfänger 6 zusammensetzen.

Der Fehlerhaushalt 40 der präzisierten Lagedaten 18 und der Fehlerhaushalt 42 der Vergleichslagedaten 34 werden dann entsprechend dem Strapdown-Algorithmus 36 und dem Modell 38 zur Korrektur der präzisierten Lagedaten 18 beziehungsweise der Vergleichslagedaten 34 zugeführt. Das heißt, dass die präzisierten Lagedaten 18 und die Vergleichslagedaten 34 iterativ um ihre Fehler bereinigt werden.

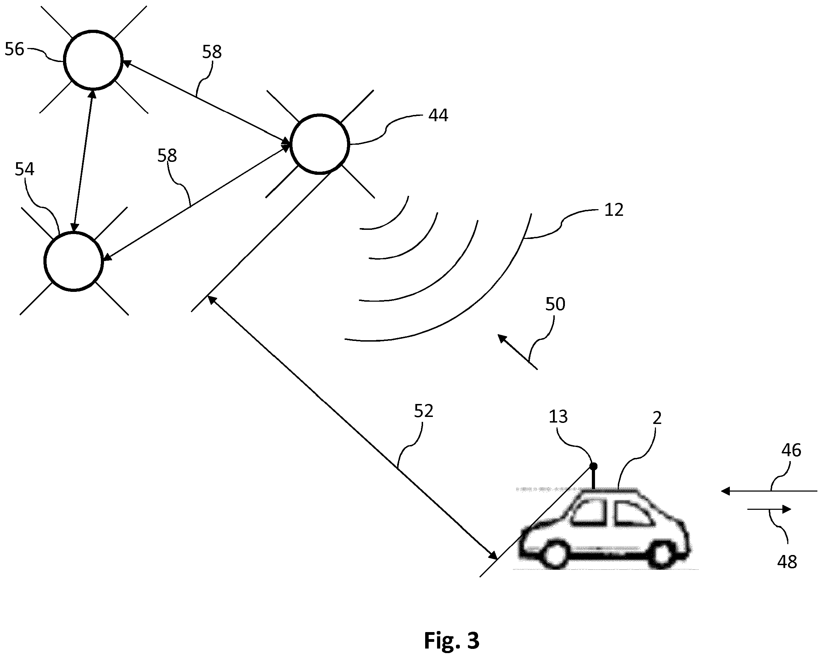

In der vorliegenden Ausführung empfängt der GNSS-Empfänger 6 das GNSS-Signal 12 von einem in den Fig. 3 dargestellten GNSS-Satelliten 44. Das von diesem GNSS-Satelliten 44 ausgesendete GNSS-Signal 12 kann mehr oder weniger stark verrauscht sein, weshalb das Modell 38 in der vorliegenden Ausführung um eine Funktion erweitert ist, die das GNSS-Signal 12 selbst oder die basierend auf dem GNSS-Signal 12 abgeleiteten GNSS-Lagedaten 8 auswertet und den GNSS-Satelliten 44 dann basierend auf der Auswertung als Quelle für das GNSS-Signal 12 auswählt.

Die folgenden, anhand der Fig. 3 dargestellten Verfahren können in beliebiger Weise miteinander kombiniert werden, auch wenn sie einzeln für sich beschrieben sind. Es ist also nicht notwendig, nur eines der Verfahren zur Auswahl eines Satelliten auszuführen. Auch die Reihenfolge ist zunächst nicht wichtig.

Es wird auf Fig. 3 Bezug genommen, die eine erste schematische Darstellung eines das GNSS-Signal 12 empfangenden Fahrzeuges 2 zeigt.

Das Fahrzeug 2 bewegt sich mit einer Geschwindigkeit 46 und einer Beschleunigung 48 über die Straße 10. Dabei soll angenommen werden, dass das Fahrzeug 2 abbremst, so dass Geschwindigkeit 46 und Beschleunigung 48 entgegengerichtet sind. Die Geschwindigkeit 46 und die Beschleunigung 48 lassen sich aus dem GNSS-Signal 12 bestimmen.

Dies kann beispielsweise durch eine differenzierte Trägerphasenmessung des GNSS-Signals 12 erfolgen. Dabei wird eine zeitliche Veränderung der Trägerphase des GNSS-Signals 12 berücksichtigt, die sich aufgrund des durch das sich bewegende Fahrzeug 2 hervorgerufenen Dopplereffektes ergibt. Als Ergebnis der differenzierten Phasenmessung ergibt sich eine Sichtrichtungsgeschwindigkeit 50, die in einer dem Fachmann bekannten Weise in die Geschwindigkeit 46 und die Beschleunigung 48 umgerechnet werden kann.

Alternativ oder zusätzlich kann auch die Position des Fahrzeuges basierend auf einer Codemessung berücksichtigt werden, aus der über eine Laufzeiterkennung des GNSS-Signals 12 ein Abstand 52 zwischen Fahrzeug 2 und dem Satelliten 44 erkannt wird, aus dem ebenfalls in einer dem Fachmann bekannten Weise die Geschwindigkeit 46 und die Beschleunigung 48 berechnet werden kann.

Nachstehend wird das erste der vier Verfahren beschrieben: Kerngedanke des ersten Verfahrens ist es, dass die Geschwindigkeit 46 und die Beschleunigung 48 gewissen physikalischen Randbedingungen genügen müssen, die sie nicht verletzen dürfen. Dieses Verfahren ist nicht Teil der Erfindung.

Ein gewöhnlicher Personenkraftwagen, der nicht auf ein sportliches Fahrverhalten ausgelegt ist, wird nicht schneller als 300km/h fahren. Zudem lässt er sich nicht mit mehr als dem 1,2-fachen der Erdbeschleunigung abbremsen. Ergibt das GNSS-Signal 12 diese Randbedingung verletzende Werte, kann der Satellit 44 entsprechend aussortiert beziehungsweise als Informationsquelle für die GNSS-Lagedaten 8 ignoriert werden.

Nachstehend wird das zweite Verfahren beschrieben:
Dem zweiten Verfahrens liegt die Überlegung zugrunde, dass sich aus dem GNSS-Signal 12 eine Sichtgeschwindigkeit 50, also die Bewegung des Fahrzeuges in Richtung des Satelliten, und ein Abstand 52 zum Satelliten 44 direkt erfassen lassen. Die Sichtgeschwindigkeit 50 als auch der Abstand 52 lassen sich basierend auf den präzisierten Lagedaten 18 über alternative Messprinzipien rekonstruieren, so dass die aus dem GNSS-Signal 12 abgeleitete Sichtgeschwindigkeit und Abstand zum Satelliten 44 als Erwartungswerte für die mit dem GNSS-Signal 12 übertragene Sichtgeschwindigkeit 50 und den Abstand 52 angesehen werden können.

Kerngedanke des zweiten Verfahrens ist es nun, dass Abweichungen zwischen den Erwartungswerten und den entsprechenden Informationen aus dem GNSS-Signal 12 zum Gesamtrauschen passen müssen, dass also eine über das Gesamtrauschen berechenbare Abweichung der zuvor genannten tatsächlichen Abweichung entspricht.

Nachstehend soll dieser Gedanke in nicht einschränkender Weise anhand eines Vergleichs der sich aus dem GNSS-Signal 12 ergebenden Sichtgeschwindigkeit 50 beschrieben werden. Das zweite Verfahren kann alternativ oder zusätzlich in der gleichen Weise basierend auf dem Abstand 52 zum Satelliten 44 durchgeführt werden.

Die Messrauschen $\sigma_{GNSS}$ der Sichtgeschwindigkeit 50 aus dem GNSS-Signal und eine Unsicherheit über die präzisierten Lagedaten 18 sowie die Unsicherheit aller anderen in die rekonstruierte Sichtgeschwindigkeit 50 eingehenden Messdaten und damit das Messrauschen $\sigma_{Rek}$ des Erwartungswertes addieren sich zu einem Gesamtmessrauschen $\sigma_{Mess}=\sigma_{GNSS}+\sigma_{Rek}$. Zudem kann zwischen der Sichtgeschwindigkeit 50 und der rekonstruierten Sichtgeschwindigkeit, also dem Erwartungswert eine Abweichung $\mu$ bestimmt werden. Für die Auswahl des Satelliten wird nun eine Schwelle festgelegt, inwieweit eine sich aus dem Gesamtmessrauschen ergebende Standardnormalabweichung:

$$\mu_{Stan.} = \sqrt{\sigma_{GNSS} + \sigma_{Rek.}}$$

von der Abweichung $\mu$ des Erwartungswertes, also der rekonstruierten Sichtgeschwindigkeit zur aus dem GNSS-Signal 12 gemessenen Sichtgeschwindigkeit 50 abweicht.

Damit ist gewährleistet, dass die Präzision der mit dem GNSS-Signal 12 übertragenen Messwerten 50, 52 an die Präzision des Erwartungswertes, also die rekonstruierte Sichtgeschwindigkeit und/oder den rekonstruierten Abstand zum Satelliten aus den präzisierten Lagedaten 18 des Fusionssensors 4 angepasst wird.

Damit durch das angegebene Verfahren nicht zu viele Satelliten 44 aussortiert werden, kann als Schwelle für die Abweichung $\mu$ ein Vielfaches der Standardabweichung $\mu_{Stand}$ verwendet werden, wobei das Vielfache sich an der gewünschten Streubreite für die Auswahl orientieren kann.

Nachstehend wird das dritte Verfahren beschrieben. Dieses Verfahren ist nicht Teil der Erfindung.

Grundgedanke des vierten Verfahrens ist es, die Lage des Satelliten 44 und weiterer Satelliten 54, 56 zueinander und aus Sicht des Fahrzeuges unabhängig von der Sichtgeschwindigkeit 50 und dem Abstand 52 bestimmbar ist, also beispielsweise anhand von Informationen, die mit dem GNSS-Signal 12 übertragen werden.

Bei bekannter Lage der Satelliten 44, 54, 56 zueinander, können sich die Sichtgeschwindigkeit 50 als auch der Abstand 52 zu den einzelnen Satelliten 44, 54, 56 nicht in beliebiger Weise ändern. Befinden sich beispielsweise alle Satelliten in Fahrtrichtung 46 vor dem Fahrzeug 2, dann müssten alle Abstände 52 zu den einzelnen Satelliten 44, 54, 56 entsprechend kleiner werden.

Praktisch kann dies beispielsweise über einen trigonometrischen Vergleich durchgeführt werden. Sind die Abstände 58 der Satelliten untereinander bekannt, und die Abstände des Fahrzeuges 2 zu mindestens zwei der Satelliten 54, 56, dann ist der Abstand 52 überbestimmt, denn er kann aus den vorherigen Informationen rekonstruiert werden. Dennoch muss der rekonstruierte Abstand zu dem tatsächlichen Abstand 52 passen, dann kann die Qualität des GNSS-Signals 12 aus dem Satellit 44 als für den Fusionssensor 4 ausreichend angenommen werden.

Letztendlich kann aus den gesamten Abständen 58 zwischen den Satelliten 44, 54, 56 und den gemessenen Abständen 52 beziehungsweise den Sichtgeschwindigkeiten 50 des Fahrzeuges 2 zu den Satelliten 44, 54, 56 mathematisch über bekannte trigonometrische Abhängigkeiten der Satelliten 44, 54, 56 und dem Fahrzeug 2 zueinander ein überbestimmtes Gleichungssystem aufgestellt werden, dass sich widerspruchsfrei auflösen lassen muss. Vorteil an diesem Gleichungssystem ist, dass der Widerspruch lokalisierbar und damit einem bestimmten Satelliten 44, 54, 56 zuordenbar ist, so dass der entsprechende Satellit 44, 54, 56 und damit sein GNSS-Signal 12 aussortiert werden kann.

Im Rahmen des vierten Verfahrens ist es Grundgedanke, dass die Sichtrichtungsgeschwindigkeit 50 und der Abstand 52 zwischen Fahrzeug 2 und dem Satelliten 44 mittels unterschiedlicher Messmethoden (Trägerphasenmessung und Codemessung) erfasst werden. Sie müssen dennoch zueinander passen. Das heißt, dass wenn der Abstand 52 zeitlich abgeleitet wird, sich die Sichtrichtungsgeschwindigkeit 50 ergeben muss. Anderenfalls liegt ein Fehler vor, aufgrund dessen der Satellit 44 aussortiert werden kann.

Vorzugsweise werden die Verfahren zur Auswahl des Satelliten 44 in der angegebenen Reihenfolge durchgeführt, denn die durch die angegebenen Verfahren abgeprüfte Präzision einerseits sowie der zur Durchführung des angegebenen Verfahrens andererseits steigen vom ersten zum vierten Verfahren hin an. Es ist daher rechentechnisch ungünstig, von den physikalischen Randbedingungen her völlig unplausible Satelliten, die bereits mit dem ersten Verfahren aussortiert werden können, in das Gleichungssystem des dritten Verfahrens mit aufzunehmen.

## Patentansprüche

1. Verfahren zum Auswählen eines Satelliten (44), der ausgebildet ist ein Globales Navigationssatellitensystem-Signal, nachstehend GNSS-Signal (12) genannt, an ein Fahrzeug (2) zu senden, umfassend:

   - Messen von Messlagedaten (50, 52) des Fahrzeuges gegenüber dem Satelliten (44) basierend auf dem GNSS-Signal (12),
   - Bestimmen von zu den basierend auf dem GNSS-Signal (12) bestimmten Messlagedaten (50, 52) redundanten Referenzlagedaten des Fahrzeuges (2), die als die Erwartungswerte der Messlagedaten (50, 52) festgelegt sind ; und
- Auswählen des Satelliten (44), wenn eine Gegenüberstellung der Messlagedaten (50, 52) und der Referenzlagedaten einer vorbestimmten Bedingung genügt, wobei die vorbestimmte Bedingung ein maximal zulässiger Fehler ($\mu_{Stan}$) zwischen den Messlagedaten (50, 52) und den Referenzlagedaten ist, **dadurch gekennzeichnet, dass** der maximal zulässige Fehler ($\mu_{Stan}$) von einer Standartabweichung abhängig ist, die basierend auf einer Summe aus einer Referenzvarianz ($\sigma_{Rek}$) für die Referenzlagedaten und einer Messvarianz ($\sigma_{GNSS}$) für die Messlagedaten (50, 52) berechnet wird, wobei der maximal zulässige Fehler ($\mu_{Stan}$) einem Vielfachen der Standardabweichung derart entspricht, dass eine Wahrscheinlichkeit, dass die Messlagedaten (50, 52) innerhalb eines von der Standardabweichung abhängigen Streuintervalls liegen, einen vorbestimmten Schwellwert unterschreitet.

**2.** Verfahren nach Anspruch 1, wobei zur Gegenüberstellung der Messlagedaten (50, 52) und der Referenzlagedaten eine Differenz ($\mu$) zwischen den Messlagedaten (50, 52) und den Referenzlagedaten gebildet wird.

**3.** Verfahren nach einem der vorstehenden Ansprüche, wobei die Messlagedaten (50, 52) des Fahrzeuges (2) und die Referenzlagedaten des Fahrzeuges (2) je einen Abstand (52) vom Satelliten (44) und/oder eine Relativgeschwindigkeit (50) in Sichtrichtung des Satelliten (44) umfassen.

**4.** Verfahren nach Anspruch 3, wobei der Abstand (52) vom Satelliten (44) und/oder die Relativgeschwindigkeit (50) in Sichtrichtung des Satelliten (44) entsprechend aus einer Codemessung und einer Phasenmessung des GNSS-Signals (12) ermittelt werden.

**5.** Verfahren nach einem der vorstehenden Ansprüche, wobei die Referenzlagedaten von Fahrdynamikdaten und/oder Odometriedaten des Fahrzeuges abhängig sind.

**6.** Steuervorrichtung (4, 6, 14) umfassend einen GNSS-Empfänger (6), einen Fusionssensor (4) und mindestens einen weiteren Sensor (14) , die eingerichtet ist, ein Verfahren nach einem der vorstehenden Ansprüche durchzuführen.

## Claims

**1.** Method for selecting a satellite (44) that is designed to send a global navigation satellite system signal, called a GNSS signal (12) below, to a vehicle (2), comprising:

- measurement of measurement location data (50, 52) relating to the vehicle with respect to the satellite (44) on the basis of the GNSS signal (12),
- determination of reference location data relating to the vehicle (2) that are redundant in relation to the measurement location data (50, 52) determined on the basis of the GNSS signal (12) and are defined as the expected values of the measurement location data (50, 52); and
- selection of the satellite (44) when a juxtaposition of the measurement location data (50, 52) and the reference location data satisfies a predetermined condition, wherein the predetermined condition is a maximum admissible error ($\mu_{Stan}$) between the measurement location data (50, 52) and the reference location data,

**characterized in that** the maximum admissible error ($\mu_{Stan}$) is dependent on a standard deviation that is calculated on the basis of a sum comprising a reference variance ($\sigma_{rec}$) for the reference location data and a measurement variance ($\sigma_{GNSS}$) for the measurement location data (50, 52), wherein the maximum admissible error ($\mu_{Stan}$) corresponds to a multiple of the standard deviation such that a probability that the measurement location data (50, 52) are within a scatter range that is dependent on the standard deviation is below a predetermined threshold value.

**2.** Method according to Claim 1, wherein the juxtaposition of the measurement location data (50, 52) and the reference location data involves a difference ($\mu$) being formed between the measurement location data (50, 52) and the reference location data.

**3.** Method according to either of the preceding claims, wherein the measurement location data (50, 52) relating to the vehicle (2) and the reference location data relating to the vehicle (2) each comprise a distance (52) from the satellite (44) and/or a relative speed (50) in the visual direction of the satellite (44).

**4.** Method according to Claim 3, wherein the distance (52) from the satellite (44) and/or the relative speed (50) in the visual direction of the satellite (44) are ascertained as appropriate from a code measurement and a phase measurement relating to the GNSS signal (12).

**5.** Method according to one of the preceding claims, wherein the reference location data are dependent on driving dynamics data and/or odometry data relating to the vehicle.

6. Control apparatus (4, 6, 14) comprising a GNSS receiver (6), a fusion sensor (4) and at least one further sensor (14), said control apparatus being configured to perform a method according to one of the preceding claims.

**Revendications**

1. Procédé pour sélectionner un satellite (44), lequel est configuré pour envoyer à un véhicule (2) un signal du système mondial de navigation par satellite, appelé ci-après signal GNSS (12), comprenant :

   - mesure de données de position de mesure (50, 52) du véhicule par rapport au satellite (44) en se basant sur le signal GNSS (12),
   - détermination de données de position de référence du véhicule (2) redondantes avec les données de position de mesure (50, 52) déterminées en se basant sur le signal GNSS (12), lesquelles sont spécifiées comme les valeurs attendues des données de position de mesure (50, 52) ; et
   - sélection du satellite (44) lorsqu'une comparaison des données de position de mesure (50, 52) et des données de position de référence satisfait à une condition prédéterminée, la condition prédéterminée étant une erreur maximale admissible ($\mu_{Stan}$) entre les données de position de mesure (50, 52) et des données de position de référence,

   **caractérisé en ce que** l'erreur maximale admissible ($\mu_{Stan}$) dépend d'un écart-type qui est calculé en se basant sur une somme d'une variance de référence ($\sigma_{Rek}$) pour les données de position de référence et d'une variance de mesure ($\sigma_{GNSS}$) pour les données de position de mesure (50, 52), l'erreur maximale admissible ($\mu_{Stan}$) correspondant à un multiple de l'écart-type de telle sorte qu'une probabilité pour que les données de position de mesure (50, 52) se trouvent à l'intérieur d'un intervalle de dispersion dépendant de l'écart-type est inférieure à une valeur de seuil prédéterminée,

2. Procédé selon la revendication 1, une différence ($\mu$) entre les données de position de mesure (50, 52) et les données de position de référence étant calculée pour la comparaison des données de position de mesure (50, 52) et des données de position de référence,

3. Procédé selon l'une des revendications précédentes, les données de position de mesure (50, 52) du véhicule (2) et les données de référence du véhicule (2) comprenant respectivement une distance (52) par rapport au satellite (44) et/ou une vitesse relative (50) dans la direction de visibilité du satellite (44).

4. Procédé selon la revendication 3, la distance (52) par rapport au satellite (44) et/ou la vitesse relative (50) dans la direction de visibilité du satellite (44) étant déterminées en conséquence à partir d'une mesure de code et d'une mesure de phase du signal GNSS (12),

5. Procédé selon l'une des revendications précédentes, les données de position de référence étant dépendantes de données de dynamique de conduite et/ou de données odométriques du véhicule.

6. Dispositif de commande (4, 6, 14), comprenant un récepteur GNSS (6), un capteur de fusion (4) et au moins un capteur supplémentaire (14), qui est conçu pour mettre en oeuvre un procédé selon l'une des revendications précédentes,

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011098333 A1
- WO 2010073113 A1
- US 2010328150 A1
- WO 9839722 A1
- DE 102006029148 A1